# EUROPEAN PATENT APPLICATION

(11) **EP 4 152 468 A1**
(43) Date of publication of application: **22.03.2023**
(21) Application number: 20935151.9
(22) Date of filing: 12.05.2020
(51) Int. Cl.: H01M 10/058, H01M 10/04

(54) **SECONDARY BATTERY**

(71) Applicant: Terawatt Technology K.K., Yokohama-shi, Kanagawa 226-0026 (JP)
(72) Inventor: NAKANO, Masatsugu, Yokohama-shi, Kanagawa 226-0026 (JP); HOSHI, Hajime, Yokohama-shi, Kanagawa 226-0026 (JP)
(74) Representative: Mewburn Ellis LLP
(86) International application number: PCT/JP2020/018963
(87) International publication number: WO 2021/229683

(57) **Abstract**

A secondary battery with excellent cycle characteristics is provided. An aspect of the present invention is a secondary battery comprising: a battery element that performs charging and discharging between a positive electrode and a negative electrode that is free of a negative electrode active material; a pair of elastic members disposed so as to interpose the battery element on both sides; a pair of supports that are disposed so as to interpose the pair of elastic members on both sides; and a pressure-applying member that applies pressure from both sides of the pair of supports, wherein the surface area of the surface of the elastic members facing the battery element is 1.2 to 2.0 times that of the surface area of the surface of the positive electrode that faces an elastic member, and the average pressure applied to this surface of the positive electrode is 1.0 to 3.0 MPa.

## Description

### Technical Field

The present invention relates to a secondary battery.

### Background Art

In recent years, techniques for converting natural energy such as solar power or wind power into electric energy have attracted more attention. Accordingly, various solid-state batteries have been developed as storage devices that are safe and that can store a large amount of electric energy.

Among these, secondary batteries that charge and discharge by transferring metal ions between a positive electrode and a negative electrode are known to have a high voltage and high energy density, and are usually lithium ion secondary batteries. In a typical lithium ion secondary battery, an active material capable of retaining lithium is introduced into the positive electrode and the negative electrode, and charging and discharging are performed by exchanging lithium ions between the positive electrode active material and the negative electrode active material. A lithium metal secondary battery has also been developed that does not use an active material in the negative electrode, but retains lithium by depositing lithium metal on the surface of the negative electrode.

For example, Patent Document 1 discloses a high energy density, high power lithium metal anode secondary battery with a volumetric energy density greater than 1000 Wh/L and/or a mass energy density greater than 350 Wh/kg when discharged at room temperature at a rate of at least 1C. Patent Document 1 discloses that an ultrathin lithium metal anode is used to realize this lithium metal anode secondary battery.

Patent Document 2 discloses a lithium secondary battery containing a positive electrode, a negative electrode, a separation film interposed between the electrodes, and an electrolyte. In the negative electrode of this lithium secondary battery, metal particles are formed on the negative electrode current collector and move from the positive electrode during charging to form lithium metal on the negative electrode current collector in the negative electrode. Patent Document 2 discloses that this lithium secondary battery can solve problems caused by the reactivity of lithium metal and problems that occur during the assembly process, and has improved performance and a longer service life.

### Citation List

### Patent Literature

Patent Document 1: JP 2019-517722 A
Patent Document 2: JP 2019-537226 A

### Summary of Invention

### Technical Problem

In a lithium metal secondary battery that retains lithium by depositing lithium metal on the surface of the negative electrode, dendrites tend to form on the surface of the negative electrode after repeated charging and discharging, inactivated lithium to which no potential is applied tends to be deposited, and a loss of capacity tends to occur. As a result, the cycle characteristics are not sufficient. Increasing the external pressure applied to the battery element during charging and discharging cycles has been considered, but it is not easy to apply pressure uniformly to the battery element in the in-plane direction.

In view of this problem, it is an object of the present invention to provide a secondary battery having excellent cycle characteristics.

### Solution to Problem

One aspect of the present invention is a secondary battery comprising: a battery element that performs charging and discharging between a positive electrode and a negative electrode that is free of a negative electrode active material; a pair of elastic members disposed so as to interpose the battery element on both sides; a pair of supports that are disposed so as to interpose the pair of elastic members on both sides; and pressure-applying members that apply pressure from both sides of the pair of supports, wherein the surface area of the surface of the elastic members facing the battery element is 1.2 to 2.0 times that of the surface area of the surface of the positive electrode that faces an elastic member, and the average pressure applied to this surface of the positive electrode is 1.0 to 3.0 MPa.

In this configuration, the pressure applied from the pressure-applying members to the pair of supports is transmitted to the battery element via the pair of elastic members. Therefore, the elastic members function as cushioning members that make the pressure transmitted from the supports to the battery element uniform in the in-plane direction (reduces variability). Also, when the battery element becomes deformed due to charging and discharging, the influence of the deformation can be suppressed.

By setting the area of the surface of the elastic members facing the battery element (the "area of the elastic member" below) to the range mentioned above (1.2 to 2.0 times) relative to the area of the surface of the positive electrode facing the elastic members (the "area of the positive electrode" below), and by setting the average pressure on the surface of the positive electrode facing the elastic members within the range mentioned above (1.0 to 3.0 MPa), the pressure can be made uniform in the in-plane direction while applying sufficient pressure to the surfaces of the positive and negative electrodes in the battery element.

Because the battery element performs charging and discharging between a positive electrode and a negative electrode that is free of a negative electrode active material, and the charging and discharging are performed by dissolving deposited metal, the energy density is increased. Because, as mentioned above, sufficient pressure is applied to the surface of the negative electrode and the pressure is made uniform in the in-plane direction, the formation of dendrites on the surface of the negative electrode during charging and discharging can be suppressed. As a result, problems such as short circuiting and capacity loss due to dendrites formed on the surface of the negative electrode can be suppressed, thus improving cycle characteristics.

The supports may have a flat plate shape, and the pressure-applying members may be disposed at each corner of the supports.

Because the pressure-applying members are disposed at each corner of the supports in this configuration, the pressure applied to the battery element can be made more uniform in the in-plane direction.

The difference between the maximum pressure and the minimum pressure on the surface of the positive electrode can be 0.5 MPa or less.

Because the pressure on the surface of each constituent member of the battery element can be made more uniform in this configuration, the formation of dendrites on the negative electrode surface can be suppressed, and the cycle characteristics can be significantly improved.

The battery element may be configured by sealing the positive electrode, the negative electrode, a separator disposed between the positive electrode and the negative electrode, and an electrolytic solution inside an outer casing.

When a battery element with a configuration in which an electrolytic solution (that acts as a conductive path for the metal ions serving as the charge carrier to lower the internal resistance of the battery and help improve the energy density) is sealed inside an outer casing, the pressure at the interface between the negative electrode and the separator can be made uniform, and the cycle characteristics can be improved.

The battery element may have a solid electrolyte disposed between the positive electrode and the negative electrode.

Because the pressure on the surface of each constituent member such as at the interface between the negative electrode and the solid electrolyte can be made uniform in this configuration, delamination at the interface between the negative electrode and the solid electrolyte can be suppressed. In other words, the cycle characteristics can be improved even when solid-state battery elements are used.

The battery element may perform charging and discharging by depositing lithium metal on the surface of the negative electrode and dissolving the deposited lithium.

This configuration can further increase the energy density.

### Effect of Invention

The present invention is able to provide a secondary battery having excellent cycle characteristics.

### Brief Description of Drawings

[Fig. 1] Fig. 1 is a cross-sectional view of the secondary battery in an embodiment of the present invention.
[Fig. 2] Fig. 2 is a perspective view of the same secondary battery.
[Fig. 3] Fig. 3 is a schematic diagram used to explain the battery element in the same secondary battery.
[Fig. 4] Fig. 4 is a diagram used to explain the production method for the same secondary battery.
[Fig. 5] Fig. 5 is a schematic diagram used to explain a modified example of the battery element in the same secondary battery.
[Fig. 6] Fig. 6 is a diagram showing the pressure distribution on the positive electrode surface in Example 2.
[Fig. 7] Fig. 7 is a diagram showing the pressure distribution on the positive electrode surface in Comparative Example 1.

### Description of Embodiments

An embodiment of the present invention will now be described with reference to the drawings. In the drawings, identical elements are designated by the same reference numbers, and redundant descriptions of these elements have been omitted. Positional relationships such as up, down, left, and right are based on the positional relationship shown in the drawings unless otherwise specified. The dimensional ratios shown in the drawings are not limited to the depicted ratios.

### Overall Configuration

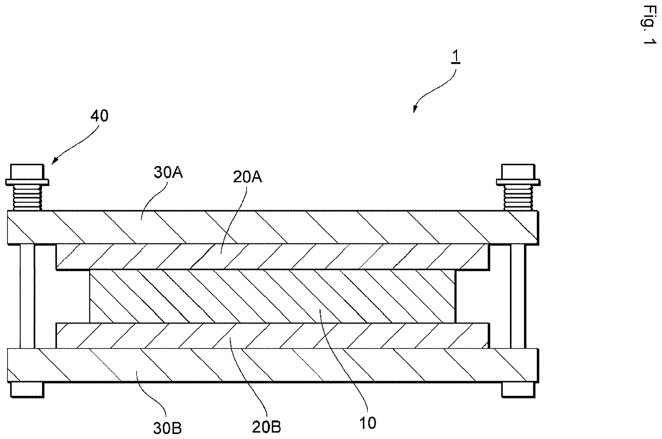

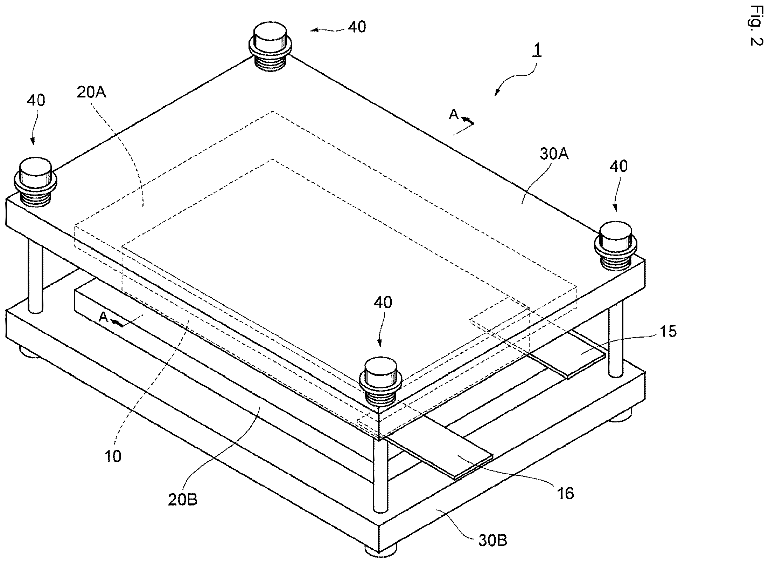

Fig. 1 is a cross-sectional view of the secondary battery 1 in an embodiment of the present invention. Fig. 2 is a perspective view of the same secondary battery 1. Note that the cross-sectional view in Fig. 1 is a cross-sectional view of the secondary battery 1 along the line AA in Fig. 2.

As shown in Fig. 1 and Fig. 2, the secondary battery 1 comprises a battery element 10 that performs charging and discharging between a positive electrode and a negative electrode that is free of a negative electrode active material; a pair of elastic members 20 (20A, 20B) disposed so as to interpose the battery element 10 on both sides; a pair of supports 30 (30A, 30B) that are disposed so as to interpose the pair of elastic members 20 on both sides; and pressure-applying members 40 that apply pressure from both sides of the pair of supports 30.

The secondary battery 1 is configured by laminating support 30B, elastic member 20B, the battery element 10, elastic member 20A, and support 30A in this order, and then fastening the supports 30A, 30B together using pressure-applying members 40. In the present specification, unless otherwise indicated, the direction of lamination is "vertical" (up and down in Fig. 1), the direction perpendicular to the direction of lamination is the "in-plane direction" (left and right in Fig. 1 and the direction perpendicular to the surface of the paper), and the "area" is the area in the in-plane direction.

### Battery Element

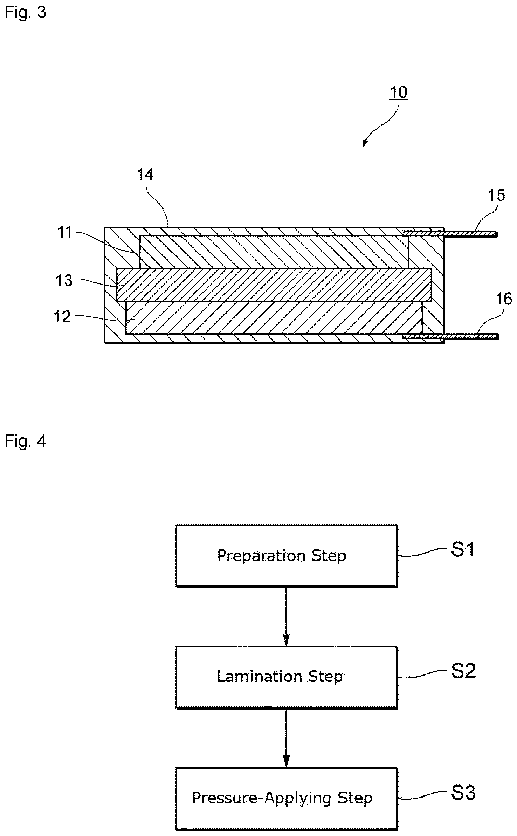

As shown in Fig. 3, the battery element 10 is a pouch cell in which the positive electrode 11, the negative electrode 12 free of a negative electrode active material, and the separator 13 disposed between the positive electrode 11 and the negative electrode 12 are sealed inside in an outer casing 14. A positive electrode terminal 15 and a negative electrode terminal 16 connected to the positive electrode 11 and the negative electrode 12 extend from the outer casing 14 and can be connected to an external circuit. The upper and lower surfaces of the battery element 10 are flat, and the size can be rectangular. However, it may have a different size (such as a circular size) depending on the intended use.

### Positive Electrode

Any positive electrode 11 commonly used in a secondary battery can be used here. This can be selected depending on the intended use of the secondary battery and the type of carrier metal being used. From the standpoint of increasing the stability and output voltage of the secondary battery, the positive electrode 11 preferably contains a positive electrode active material.

The positive electrode active material is a material used to hold metal ions in the positive electrode, and this serves as a host material for the metal ions. Examples of positive electrode active materials include, but are not limited to, metal oxides and metal phosphates. Examples of metal oxides include, but are not limited to, cobalt oxide-based compounds, manganese oxide-based compounds, and nickel oxide-based compounds. Examples of metal phosphates include, but are not limited to, iron phosphate-based compounds and cobalt phosphate-based compounds.

When the carrier metal is lithium ions, typical examples of positive electrode active materials include lithium nickel cobalt aluminum oxide (NCA, LiNiCoAlO₂), lithium nickel cobalt magnesium oxide (LiNiCoMnO₂, referred to as NCM and depending on the difference in element ratio sometimes as NCM622, NCM523, NCM811, etc.), lithium cobaltate (LCO, LiCoO₂) and lithium iron phosphate (LFP, LiFePO₄) can be mentioned. These positive electrode active materials can be used alone or in combinations of two or more. The amount of positive electrode active material included may be, for example, 50% by mass or more and 100% by mass or less relative to the overall mass of the positive electrode 11.

The positive electrode 11 may contain components other than the positive electrode active material. Examples of these components include, but are not limited to, conductive aids, binders, solid polymer electrolytes, and inorganic solid electrolytes commonly used in the art.

The positive electrode 11 may contain a binder. Examples of binders include fluorine-based binders, water-based binders, and imide-based binders. Specific examples of binders include polyvinylidene fluoride (PvDF), styrene-butadiene rubber and carboxymethyl cellulose (SBR-CMC) mixtures, polyacrylic acid (PAA), lithium polyacrylate (Li-PAA), polyimide (PI), polyamideimide (PAI), and aramids. The amount of binder included may be, for example, 0.5% by mass or more and 30% by mass or less relative to the overall mass of the positive electrode 11.

The positive electrode 11 may contain a conductive aid. Examples of conductive aids that can be used include carbon black, acetylene black (AB), carbon nanofibers (VGCF), single-walled carbon nanotubes (SWCNT), and multi-walled carbon nanotubes (MWCNT). The amount of conductive aid included may be, for example, 0.5% by mass or more and 30% by mass or less relative to the overall mass of the positive electrode 11.

The weight per unit area of the positive electrode 11 can be, for example, from 10 to 40 mg/cm². The thickness of the positive electrode active material 12 can be, for example, from 30 to 150 µm. The density of the positive electrode 11 can be, for example, from 2.5 to 4.5 g/ml. The areal capacity of the positive electrode 11 can be, for example, from 1.0 to 10.0 mAh/cm².

The area of the positive electrode 11 is preferably 10 cm² or more and 300 cm² or less, more preferably 20 cm² or more and 250 cm² or less, and even more preferably 50 cm² or more and 200 cm² or less.

The thickness (length in the vertical direction) of the positive electrode 11 is preferably 20 µm or more and 150 µm or less, more preferably 40 µm or more and 120 µm or less, and even more preferably 50 µm or more and 100 µm or less.

### Negative Electrode

The negative electrode 12 is free of a negative electrode active material. It can be difficult to increase the energy density of a battery that has a negative electrode including a negative electrode active material because of the presence of the negative electrode active material. However, because the battery element 10 in the present embodiment has a negative electrode 12 that is free of a negative electrode active material, this problem does not arise. In other words, the battery element 10 (secondary battery 1) has a high energy density because charging and discharging are performed by depositing metal on the surface of the negative electrode 12 and dissolving the deposited metal.

Here, "negative electrode active material" refers to the material holding the metal ("carrier metal" below) corresponding to the metal ions serving as the charge carrier in the battery on the negative electrode 12, and may also be referred to as the carrier metal host material. Examples of holding mechanisms include, but are not limited to, intercalation, alloying, and occlusion of metallic clusters. The negative electrode active material is typically used to retain lithium metal or lithium ions in the negative electrode 12.

Examples of negative electrode active materials include, but are not limited to, carbon-based substances, metal oxides, metals, and alloys. Carbon-based substances include, but are not limited to, graphene, graphite, hard carbon, mesoporous carbon, carbon nanotubes, and carbon nanohorns. Examples of metal oxides include, but are not limited to, titanium oxide-based compounds, tin oxide-based compounds, and cobalt oxide-based compounds. There are no particular restrictions on the metal or alloy as long as it can be alloyed with the carrier metal. Examples include silicon, germanium, tin, lead, aluminum, gallium, and alloys containing these.

There are no particular restrictions on the negative electrode 12 as long as it does not contain a negative electrode active material and can be used as a current collector. Examples include at least one type selected from the group consisting of metals such as Cu, Ni, Ti, Fe and other metals that do not react with Li, alloys of these metals, and stainless steel (SUS). When SUS is used as negative electrode 12, any well-known type of SUS can be used. The negative electrode materials mentioned above may be used alone or in combinations of two or more. A "metal that does not react with Li" refers to a metal that does not react with lithium ions or lithium metal to form an alloy under the operating conditions of the battery element 10 (secondary battery 1).

The negative electrode 12 is preferably a lithium-free electrode. Because highly flammable lithium metal does not have to be used in the production process, a battery element 10 (secondary battery 1) with even better safety and productivity can be realized. From this standpoint and from the standpoint of improving the stability of the negative electrode 12, the negative electrode 12 is preferably at least one type selected from the group consisting of Cu, Ni, alloys of these metals, and stainless steel (SUS). From the same standpoints, the negative electrode 12 is more preferably made of Cu, Ni, or alloys these metals, and even more preferably of Cu or Ni.

A "negative electrode free of a negative electrode active material" is also referred to as a "zero anode" or "anode free," and means the amount of negative electrode active material in the negative electrode is 10% by mass or less relative to the overall mass of the negative electrode. The amount of negative electrode active material in the negative electrode is preferably 5.0% by mass or less, more preferably 1.0% by mass or less, even more preferably 0.1% by mass or less, and still more preferably 0.0% by mass or less, relative to the overall mass of the negative electrode.

The negative electrode 12 preferably has an adhesive layer formed on the surface to improve adhesion between the deposited carrier metal and the negative electrode. In this aspect of the present invention, when a carrier metal, especially lithium metal, is deposited on the negative electrode 12, adhesion between the negative electrode 12 and the deposited metal can be improved. As a result, delamination of the deposited metal from the negative electrode 12 can be suppressed, so that the cycle characteristics of the battery element 10 (secondary battery 1) are improved.

Examples of adhesive layers include metals other than that in the negative electrode, alloys of these metals, and carbonaceous materials. Examples of adhesive layers include, but are not limited to, Au, Ag, Pt, Sb, Pb, In, Sn, Zn, Bi, Al, Ni, Cu, graphene, graphite, hard carbon, mesoporous carbon, carbon nanotubes, and carbon nanohorns. There are no particular restrictions on the thickness of the adhesive layer, but it is preferably 1 nm or more and 300 nm or less, and more preferably 50 nm or more and 150 nm or less. Using the adhesive layer in this aspect of the present invention results in even better adhesiveness between the negative electrode 12 and the deposited metal. When the adhesive layer corresponds to the negative electrode active material described above, the adhesive layer is 10% by mass or less, preferably 5.0% by mass or less, more preferably 1.0% by mass or less, and still more preferably 0.1% by mass relative to the negative electrode.

The area of the negative electrode 12 is preferably larger than that of the positive electrode 11. For example, the four sides of the negative electrode 12 may be slightly larger than the positive electrode 11 (for example, about 0.5 to 1.0 mm).

The thickness (length in the vertical direction) of the negative electrode 12 is preferably 20 µm or less, more preferably 10 µm or less, and even more preferably 1 µm or less.

### Separator

The separator 13 is the component that separates the positive electrode 11 and the negative electrode 12 to prevent short circuiting, while maintaining conductivity of the metal ions serving as the charge carrier between the positive electrode 11 and the negative electrode 12. When an electrolytic solution is used, the separator 13 also plays a role in retaining the electrolytic solution.

The separator 13 preferably has a separator base material and a separator coating layer coating the surface of the separator base material. There are no particular restrictions on the separator base material as long as it can play this role, and can be, for example, a porous material such as porous polyethylene (PE), polypropylene (PP), or a laminated structure thereof. The area of the separator 13 is preferably larger than the area of the positive electrode 11 and the negative electrode 12, and the thickness is preferably from 5 to 20 µm, for example.

In the present embodiment, the separator coating layer can be applied to one or both sides of the separator base material. The separator coating layer firmly bonds the separator base material to the adjacent layers above and below the base material, while maintaining ionic conductivity and without reacting with the metal ions serving as the charge carriers. There are no restrictions on the separator coating layer as long as it has these characteristics. For example, it may consist of a binder such as polyvinylidene fluoride (PvDF), styrene-butadiene rubber and carboxymethyl cellulose (SBR-CMC) mixtures, polyacrylic acid (PAA), lithium polyacrylate (Li-PAA), polyimide (PI), polyamideimide (PAI), and aramids. The separator coating layer may contain inorganic particles such as silica, alumina, titania, zirconia, magnesium oxide, or magnesium hydroxide particles.

### Electrolytic Solution

The battery element 10 may contain an electrolytic solution. The separator 13 is immersed in the electrolytic solution. The electrolytic solution is an ionically conductive solution prepared by dissolving an electrolyte in a solvent that acts as a conductive path for lithium ions. When an electrolytic solution is used, the internal resistance of the battery element 10 can be lowered and the energy density and cycle characteristics improved.

A lithium salt is preferably used as the electrolyte. Examples of lithium salts include, but are not limited to, LiPF₆, LiBF₄, lithium bis(trifluoromethanesulfonyl)imide (LiTFSI), lithium bis(fluorosulfonyl)imide (LiFSI), LiClO₄, lithium bisoxalate borate (LiBOB), and lithium bis(pentafluoroethanesulfonyl)imide (LiBETI). The lithium salt is preferably LiFSI from the standpoint of improving the cycle characteristics of the battery 1 even more. These lithium salts may be used alone or in combinations of two or more.

Examples of solvents include, but are not limited to, ethylene carbonate (EC), propylene carbonate (PC), dimethyl carbonate (DMC), 1,2-dimethoxyethane (DME), diethyl carbonate (DEC), γ-butyrolactone (GBL), 1,3-dioxolane (DOL), and fluoroethylene carbonate (FEC).

### Outer Casing

The outer casing 14 houses and seals the positive electrode 11, the negative electrode 12, the separator 13, and the electrolytic solution in the battery element 10, and can be made of, for example, a laminate film.

### Positive Electrode Terminal and Negative Electrode Terminal

One end of the positive electrode terminal 15 is connected to the upper surface of the positive electrode 11 (the surface opposite the one facing the separator 13) and extends from the outer casing 14, and the other end is connected to an external circuit (not shown). One end of the negative electrode terminal 16 is connected to the lower surface of the negative electrode 12 (the surface opposite one facing the separator 13) and from the outer casing 14, and the other end is connected to an external circuit (not shown). There are no particular restrictions on the materials used in the positive electrode terminal 15 and the negative electrode terminal 16 as long as they are conductive. Examples include Al and Ni.

### Elastic Members

As shown in Fig. 1, each of the pair of elastic members 20 (20A, 20B) is a sheet-like member with a rectangular size on both sides. The pair of elastic members 20 are disposed on both surfaces (the upper surface and lower surface) of the battery element 10 so that the battery element 10 is interposed between them. The elastic members 20 have viscoelasticity (the property of absorbing and recovering from distortion from an impact) and rubber elasticity (the property of resisting deformation from significant internal stress against deformation), and act as cushioning members between the battery element 10 and supports 30. In other words, the pressure transmitted from the supports 30 can be made uniform in the in-plane direction of the battery element 10 (variability can be reduced), and the effects of deformation can be suppressed even when the battery element 10 becomes deformed due to charging and discharging.

The elastic members 20 are typically made of a rubber material commonly used in the art such as a silicone rubber or a natural rubber. In order to function as cushioning members, the Shore A hardness of the rubber is preferably from 40 to 70, and the thickness is preferably from 0.5 to 10 mm. The elastic members 20 have lower rigidity than the supports 30, and preferably have a Young's modulus of 0.01 to 0.05 GPa.

The present inventors discovered that the cycle characteristics of the secondary battery 1 could be improved by adjusting the area ratio between the surface of the elastic members 20 facing the electronic element 10 ("the surface of the elastic members 20" below) and the surface of the positive electrode 11 facing an elastic member 20 ("surface of the positive electrode 11" below) and by adjusting the average pressure applied to the surface of positive electrode 11.

In the present embodiment, the surface area of the elastic member 20 is 1.2 to 2.0 times that of the positive electrode 11. The average pressure on the surface of the positive electrode 11 is set to 1.0 to 3.0 MPa by adjusting the pressure applied from the pressure-applying members 40 to the supports 30 as described later. There are no particular restrictions on the shape of the surface of the elastic members 20 as long as they have the area mentioned above and completely cover the battery element 10. For example, they may have a shape similar to that of the surface of the positive electrode 11.

### Support

As shown in Fig. 1 and Fig. 2, each of the pair of supports 30 (30A, 30B) is a plate-like member having a square size on both sides. Support 30A is disposed on the upper surface of elastic member 20A, support 30B is arranged on the lower surface of elastic member 20B, and the pair of supports 30 interpose the pair of elastic members 20.

The supports 30 must be strong enough to sustain a sufficient amount of pressure from the pressure-applying members 40, and are preferably components with a high degree of rigidity (for example, a Young's modulus of 50 to 250 GPa). There are no particular restrictions on the material used in the supports 30. Examples include iron, aluminum, and stainless steel. The thickness of the supports 30 can be, for example, about 50 to 250 mm. Through-holes pass through the support 30s in the vertical direction (thickness direction) in the four corners of the supports 30 for attaching the pressure-applying members 40 to be described later.

There are no particular restrictions on the size and shape of the surfaces of the supports 30 facing the elastic members 20 ("the surfaces of the supports 30" below) as long as they can completely cover the elastic members 20 and maintain through-holes in the four corners for attaching the pressure-applying members 40. For example, the size may be similar to that of the surface of the elastic members 20, and from 0.8 to 1.5 times the area of the surface of the elastic members 20.

### Pressure-Applying Member

As shown in Fig. 1 and Fig. 2, four pressure-applying members 40 are disposed at the four corners of the supports 30. The pressure-applying members 40 fasten and secure the pair of supports 30 to each other and apply pressure to the upper and lower supports 30A, 30B from both sides. Specifically, the pressure-applying members 40 are composed of a bolt 41, a nut 42, and a coil spring 42. When the nut 42 is tightened to narrow the distance between the head of the bolt 40 and the nut 42, the coil spring 42 presses support 30A downward, and the nut 42 presses support 30B upward.

The pressure applied by the pressure-applying members 40 to the pair of supports 30 can be changed by adjusting how tight the nut 42 is relative to the bolt 41 in the pressure-applying members 40. In the present embodiment, the average pressure on the surface of the positive electrode 11 in the battery element 10 is set from 1.0 to 3.0 MPa by adjusting the pressure applied by the pressure-applying members 40 to the supports 30. From the standpoint of applying uniform pressure to the positive electrode 11 in the in-plane direction, each pressure-applying member 40 is preferably arranged at a linearly symmetrical position with respect to the surface of the supports 30. Here, applying uniform pressure to the positive electrode 11 in the in-plane direction means the difference (pressure difference) between the maximum pressure and the minimum pressure on the surface of the positive electrode 11 is small. The difference is preferably 0.5 MPa or less, and more preferably 0.3 MPa or less.

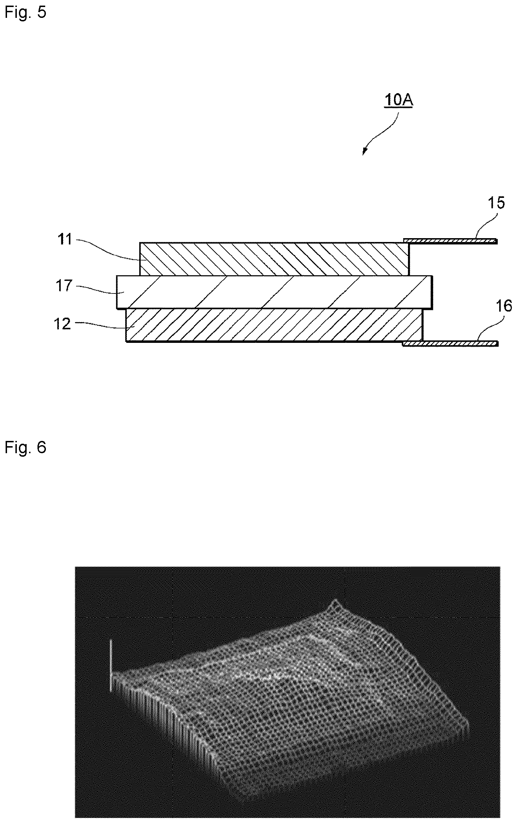

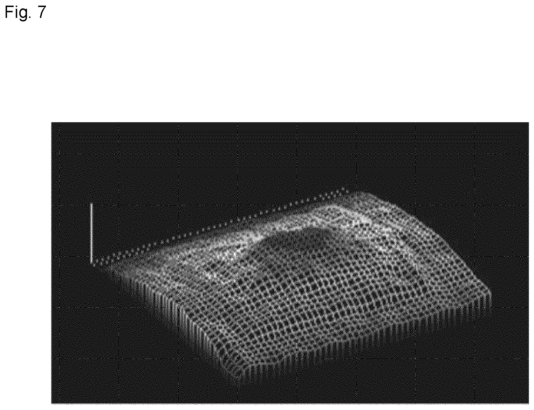

The average pressure on the surface of the positive electrode 11 can be measured using any well-known in-plane pressure distribution measuring device (such as I-SCAN from Nitta Co., Ltd.). Specifically, the in-plane pressure distribution can be obtained by placing the sensor sheet of the in-plane pressure distribution measuring device between the upper surface (positive electrode 11 side) of the battery element 10 and elastic member 20A, and performing an image analysis on the output from the sensor sheet using software (see Fig. 6 and Fig. 7). The resulting pressure distribution can then be used to calculate the average pressure and the difference between the maximum pressure and the minimum pressure in the in-plane direction.

Because a well-known in-plane pressure distribution measuring device can be used to measure the in-plane pressure distribution in real time, the average pressure on the surface of the positive electrode 11 can be set to 1.0 to 3.0 MPa while adjusting the amount of pressure applied by the pressure-applying members 40 (by tightening the nuts 42). Alternatively, the correlation between the amount of pressure applied (the amount of nut 42 tightening, the distance between support 30A and support 30B, the bend in the supports 30A, 30B, etc.) and the average pressure on the surface of the positive electrode 11 can be obtained in advance, and the desired average pressure may be obtained by adjusting the amount of pressure applied based on this correlation.

Any pressure-applying members 40 can be used as long they can secure the upper and lower supports 30A, 30B to each other and apply a predetermined amount of pressure from both sides. Examples include rivets, split pins, and nuts welded to bolts. (When the amount of pressure applied cannot be adjusted, the amount of pressure required to set the average pressure along the surface of the positive electrode 11 to a value from 1.0 to 3.0 MPa should be determined in advance.) The pressure-applying members 40 may also be clamps that are placed around the periphery of the supports 30A and 30B to clamp them together, instead of nuts and bolts passing through portions of the supports 30A, 30B.

### Secondary Battery Production Method

As shown in Fig. 4, the secondary battery 1 can be produced by preparing the battery element 10, the pair of elastic members 20, the pair of supports 30, and the pressure-applying members 40 (preparation step: S1), laminating support 30B, elastic member 20B, the battery element 10, elastic body 20A, and support 30A in this order (lamination step: S2), and then fastening the upper and lower supports 30A, 30B together using the pressure-applying members 40 to apply pressure to the supports 30A, 30B (pressure applying step: S3). In the pressure applying step (S3), the amount of pressure applied by the pressure-applying members 40 is adjusted so that the average pressure on the surface of the positive electrode 11 in the electronic element 10 is from 1.0 to 3.0 MPa. As mentioned above, the correlation between the amount of pressure applied (the amount of nut 42 tightening, the distance between support 30A and support 30B, the bend in the supports 30A, 30B, etc.) and the average pressure on the surface of the positive electrode 11 can be obtained in advance using a well-known in-plane pressure distribution measuring device, and the amount of pressure applied adjusted based on this correlation.

In the preparation step (S1), the battery element 10 can be manufactured in the following way. First, a positive electrode mixture obtained by mixing a positive electrode active material, a conductive agent common in the art, and a binder common in the art is applied to one side of metal foil (for example, Al foil) with a thickness of 5 µm or more and 1 mm or less, and then press-molded to obtain a positive electrode 11. Next, metal foil (such as electrolytic Cu foil) with a thickness of 1 µm or more and 1 mm or less is washed with a solvent containing sulfamic acid, punched out to a predetermined size, washed again ultrasonically with ethanol, and then dried to obtain the negative electrode 12. Next, after applying a binder solution to one side of a separator base material to form a separator coating layer and allowing the separator coating layer to dry, the binder solution is applied to the other side of the separator base material to form a separator coating layer, which is allowed to dry in order to complete a separator 13. The negative electrode 12, the separator 13, and the positive electrode 11 obtained in this way are then laminated in this order. A positive electrode terminal 15 and a negative electrode terminal 16 (for example, Al, Ni, etc.) are then joined to the positive electrode 11 and the negative electrode 12 by, for example, ultrasonic welding, and inserted into a laminated outer casing 14. An electrolytic solution is added to the outer casing 14 and the outer casing 14 is sealed to complete the battery element 10.

### Uses of Secondary Battery

The positive terminal 15 is connected to one end of an external circuit and the negative terminal 16 to the other end, and the secondary battery 1 is charged and discharged. The battery element 10 performs charging and discharging between a positive electrode 11 and a negative electrode 12 that is free of a negative electrode active material, by depositing metal on the surface of the negative electrode 12 and dissolving the deposited metal. This increases the energy density.

Specifically, a voltage is applied between the positive electrode terminal 15 and the negative electrode terminal 16 so that current flows from the negative electrode terminal 16 through the external circuit to the positive electrode terminal 15, and the secondary battery 1 (battery element 10) is charged. During charging of the secondary battery 1, the carrier metal is deposited at the interface between the negative electrode 12 and the separator 13. The deposited carrier metal is typically lithium metal.

In the secondary battery 1, a solid electrolyte interface layer (SEI layer) may be formed at the interface between negative electrode 12 and separator 13 during the initial charging. There are no particular restrictions on the SEI layer that is formed, but it may contain, for example, an inorganic carrier metal and an organic carrier metal. Typically, a lithium-containing inorganic compound and a lithium-containing organic compound may be included. The typical average thickness of the SEI layer is 1 nm or more and 10 µm or less. When an SEI layer is formed in the secondary battery 1, the carrier metal that precipitates during charging of the secondary battery 1 may precipitate at the interface between the negative electrode 12 and the SEI layer, and may precipitate at the interface between the SEI layer and the separator 13.

When the positive terminal 15 and the negative terminal 16 of the charged secondary battery 1 are connected, the secondary battery 1 is discharged. The carrier metal precipitate at the interface between the negative electrode 12 and the separator 13 then dissolves. (When an SEI layer is formed, interface means either the interface between the negative electrode 12 and the SEI layer or the interface between the SEI layer and the separator 13; the same applies below.)

In the present embodiment, the surface area of the elastic members 20 is 1.2 to 2.0 times the surface area of the positive electrode 11, and the average pressure applied to the surface of the positive electrode 11 is from 1.0 to 3.0 MPa. In this way, sufficient pressure can be applied to each surface of the constituent components (the positive electrode 11, the negative electrode 12, the separator 13) of the battery element 10, and the pressure distribution in the in-plane direction can be made uniform (the difference between maximum pressure and minimum pressure is reduced). As a result, the carrier metal is uniformly deposited in the in-plane direction at the interface between the negative electrode 12 and the separator 13, and the formation of dendrites on the surface of the negative electrode 12 can be suppressed during charging and discharging (by inducing the carrier metal to grow in a non-dendritic form such as a flat or undulating form). This makes it possible to avoid problems such as short circuiting and capacity loss caused by dendrites formed on the surface of the negative electrode 12, and improves the cycle characteristics of the secondary battery 1 (battery element 10).

### Modified Examples

The embodiment described above is provided merely to explain the present invention and is not intended to limit the present invention to the embodiment. Various modifications are possible without departing from the scope and spirit of the present invention.

The battery element may have a solid electrolyte layer instead of a separator. Fig. 5 is a schematic diagram used to explain a modified example of the battery element 10A. The battery element 10A shown in Fig. 5 is a solid battery in which a fixed electrolyte layer 17 is formed between the positive electrode 11 and the negative electrode 13. This battery element 10A differs from the battery element 10 in the embodiment described above (Fig. 3) in that the separator 13 has been changed to a solid electrolyte layer 17 and an outer casing is not required.

In general, in a battery containing an electrolytic solution, the physical pressure applied by the electrolytic solution to the surface of the negative electrode tends to vary locally due to fluctuations in the liquid. Because the battery element 10A includes a solid electrolyte layer 17, the pressure applied to the surface of the negative electrode 12 is more uniform, and the shape of the carrier metal deposited on the surface of the negative electrode 12 is more uniform. Because the carrier metal deposited on the surface of the negative electrode 12 is kept from growing in the form of dendrites, the cycle characteristics of the secondary battery (battery element 10A) are further improved.

A commonly used material can be selected for the solid electrolyte layer 17 based on the intended application of the secondary battery and the type of carrier metal used. Preferably, the solid electrolyte layer 17 has ionic conductivity and no electron conductivity. This can further reduce the internal resistance in the battery element 10A and further suppress short-circuiting inside the battery element 10A. As a result, the secondary battery (battery element 10A) has a higher energy density and even more excellent cycle characteristics.

There are no particular restrictions on the solid electrolyte layer 17, which may include, for example, resins and lithium salts. Resins include, but are not limited to, resins having an ethylene oxide unit in the main chain and/or a side chain, acrylic resins, vinyl resins, ester resins, nylon resins, polysiloxanes, polyphosphazene, polyvinylidene fluoride, polymethyl methacrylate, polyamides, polyimides, aramids, polylactic acid, polyethylenes, polystyrenes, polyurethanes, polypropylenes, polybutylenes, polyacetals, polysulfones, and polytetrafluoroethylene. These resins can be used alone or in combinations of two or more.

There are no particular restrictions on the salt used in the solid electrolyte layer 17. Examples include salts of Li, Na, K, Ca, and Mg. Examples of lithium salts that can be used in the solid electrolyte layer 17 include, but are not limited to, Lil, LiCI, LiBr, LiF, LiBF₄, LiPF₆, LiAsF₆, LiSOsCFs, LiN(SO₂F)₂, LiN(SO₂CF₃)₂, LiN(SO₂CF₃CF₃)₂, LiB(O₂C₂H₄)₂, LiB(O₂C₂H₄)F₂, LiB(OCOCF₃)₄, LiNOs, and Li₂SO₄. These lithium salts can be used alone or in combinations of two or more.

Generally, the ratio of resin to lithium salt in the solid electrolyte is determined by the ratio of oxygen atoms in the resin to lithium atoms in the lithium salt ([Li]/[O]). In the solid electrolyte layer 17 of the present embodiment, the ([Li]/[O]) ratio is preferably 0.02 or more and 0.20 or less, more preferably 0.03 or more and 0.15 or less, and even more preferably 0.04 or more and 0.12 or less.

The solid electrolyte layer 17 may contain components other than the resins and salts mentioned above. For example, the layer may contain an electrolytic solution similar to the electrolytic solution in the battery element 10. In this case, the battery element 10A is preferably sealed inside an outer casing.

The solid electrolyte layer 17 preferably has a certain thickness from the standpoint of reliably separating the positive electrode from the negative electrode. However, from the standpoint of increasing the energy density of the secondary battery (battery element 10A), the thickness is preferably kept below a certain level. Specifically, the average thickness of the solid electrolyte layer 17 is preferably from 5 µm to 20 µm, more preferably from 7 µm to 18 µm or less, and even more preferably from 10 µm to 15 µm.

In the present specification, "solid electrolyte" includes gel electrolytes. Gel electrolytes include, but are not limited to, those containing polymers, organic solvents, and lithium salts. Polymers that can be used in a gel electrolyte include, but are not limited to, copolymers of polyethylene and/or polyethylene oxide, polyvinylidene fluoride, and copolymers of polyvinylidene fluoride, and hexafluoropropylene.

The battery element may also have a current collector arranged so as to be in contact with the positive electrode or the negative electrode. Here, a positive terminal and a negative terminal are connected to the current collector. There are no particular restrictions on the current. Examples include current collectors that can be used with negative electrode materials. When the battery element does not have a current collector, the negative electrode and the positive electrode themselves act as current collectors.

The battery element may also be formed by laminating a plurality of negative electrodes, separators or solid electrolyte layers, and positive electrodes to improve battery capacity and output voltage. The number of laminated units may be, for example, three or more, and preferably from ten to 30.

In the present specification, "high energy density" means the capacity is high relative to the total volume or total mass of the battery. This is preferably 800 Wh/L or more or 350 Wh/kg or more, more preferably 900 Wh/L or more or 400 Wh/kg or more, and even more preferably 1000 Wh/L or more or 450 Wh/kg or more.

In the present specification, "excellent cycle characteristics" means that the rate of decline in battery capacity is low after a number of charge/discharge cycles that can be expected during normal use. In other words, when comparing the initial capacity to the capacity after the number of charging and discharging cycles that can be expected during normal use, the capacity after the charging and discharging cycles has declined significantly relative to the initial capacity. Here, the "number of times that can be expected during normal use" can be, for example, 50 times, 100 times, 500 times, 1000 times, or 5000 times, depending on the application for the secondary battery. "The capacity hasn't declined much after the charging and discharging cycles relative to the initial capacity" depends on the application for the secondary battery. For example, it may mean that the capacity after the charge/discharge cycles is 75% or more, 80% or more, or 85% or more of the initial capacity.

### Examples

The following is a more detailed description of the present invention with reference to examples and comparative examples. The present invention is not limited in any way by these examples.

A mixture of 96 parts by mass LiNi_{0.8}Co_{0.15}Al_{0.05}O₂ positive electrode active material, 2 parts by mass of acetylene black (AB) conductive agent, and 2 parts by mass polyvinylidene fluoride (PVDF) binder was applied to one side of 12 µm-thickAl foil, which was then press-molded and punched out to obtain a 40 mm × 40 mm positive electrode. Next, rolled copper foil with a thickness of 10 µm was punched out to obtain a 45 mm × 45 mm negative electrode. A positive electrode terminal and a negative electrode terminal were joined to the positive electrode and the negative electrode via Ni terminals by ultrasonic welding. Next, a separator was prepared by coating both sides of 12 µm-thick polyethylene with a mixture of polyvinylidene fluoride (PVDF) and Al₂O₃ (thickness: 2 µm), and the resulting separator was punched out to a size of 50 mm × 50 mm.

The negative electrode, separator, and positive electrode were laminated in this order and inserted into an outer casing made of an aluminum laminate. An electrolytic solution obtained by dissolving 4M LiFSI in DME (dimethoxyethane) was added, and the outer casing was sealed. In this way, the battery element shown in Fig. 3 was obtained.

A pair of silicon rubber elastic members were prepared (silicon rubber sheets from Sogawa Rubber Co., Ltd., Shore A hardness: 50) with a thickness of 2 mm and an area of 4.4 mm × 4.4 mm (1.2 times the area of the positive electrode). A pair of 10 mm thick, 65 mm × 116 mm steel plates (Young's modulus: 206,000 MPa) with bolt holes drilled into the four corners were prepared as supports. The battery element and the pair of elastic members prepared above were arranged so as to be interposed between the supports, and the four corners of the upper and lower supports were fastened with pressure-applying members consisting of bolts, nuts, and coil springs. The amount of pressure-applying member tightening was adjusted so that the average pressure applied to the surface of the positive electrode was 1.0 MPa. The difference between the maximum pressure and the minimum pressure (maximum/minimum pressure difference) applied to the positive electrode surface at this time was 0.3 MPa. In this way, the secondary battery in the embodiment shown in Fig. 1 was produced.

### Examples 2 to 5

In Examples 2 to 5, batteries were prepared in the same manner as in Example 1 except for the area of the members (the ratio relative to the area of the positive electrode) and the average pressure applied to the surface of the positive electrode (the amount of tightening of the pressure-applying members). Fig. 6 shows the pressure distribution on the surface of the positive electrode in Example 2.

### Comparative Examples 1 to 4

In Comparative Examples 1 to 4, batteries were prepared in the same manner as in Example 1 except for the area of the members (the ratio relative to the area of the positive electrode) and the average pressure applied to the surface of the positive electrode (the amount of tightening of the pressure-applying members). Fig. 7 shows the pressure distribution on the surface of the positive electrode in Comparative Example 1.

### Evaluation of Cycle Characteristics

The secondary batteries produced in each of the examples and comparative examples were charged and discharged 50 times, and the cycle characteristics were evaluated as follows. In the first cycle, the secondary batteries were charged at 3.2 mA to a voltage of 4.2 V, and then discharged at 3.2 mA to a voltage of 3.0 V (the "initial discharge" below). For two to 50 cycles, the battery was charged at 16mA to a voltage of 4.2 V and then discharged at 32 mA to a voltage of 3.0 V. The temperature was kept at 25°C for all cycles. The ratio of the capacity obtained from the discharge after 50 cycles ("capacity after use" below) to the capacity obtained from the initial discharge (the "initial capacity" below) (capacity after use/initial capacity or "capacity retention rate" below) was then determined for each example and comparative example.

Table 1 shows the evaluation of cycle characteristics of each example and comparative example. The initial capacity was 100 mAh for all examples and comparative examples.

**Table 1**

| | Elastic Member Area (Positive Electrode Ratio) | Average Pressure (MPa) | High/Low Pressure Difference (MPa) | Capacity Retention Rate After 50 Cycles (%) |
|---|---|---|---|---|
| Example 1 | 1.2 | 1.0 | 0.3 | 80 |
| Example 2 | 1.2 | 1.5 | 0.3 | 80 |
| Example 3 | 1.2 | 3.0 | 0.5 | 75 |
| Example 4 | 1.5 | 1.5 | 0.3 | 85 |
| Example 5 | 2.0 | 1.5 | 0.2 | 80 |
| Comparative Example 1 | 1.0 | 1.5 | 1.0 | 30 |
| Comparative Example 2 | 1.2 | 0.7 | 0.3 | 50 |
| Comparative Example 3 | 1.2 | 3.5 | 0.8 | 60 |
| Comparative Example 4 | 2.5 | 1.5 | 0.7 | 55 |

As shown in Table 1, Examples 1 to 5 had a capacity retention rate after 50 cycles that was superior to that of Comparative Examples 1 to 4. Unlike Comparative Examples 1 to 4, adjusting the area of the elastic members and the average pressure applied to the positive electrode surface to the appropriate ranges is believed to enable sufficient pressure to be applied to the battery element while keeping the pressure difference on the surface of the positive electrode within the appropriate range.

In other words, if the area of the elastic members is not sufficient as in Comparative Example 1 (positive electrode ratio: 1.0) or is too large as in Comparative Example 4 (positive electrode ratio: 2.5), the elastic members do not function sufficiently as cushioning members, the pressure difference on the surface of the positive electrode increases (1.0 MPa, 0.7 MPa), and the capacity retention rate decreases even when the average pressure on the positive electrode surface is sufficient (1.0 MPa, 1.5 MPa). Also, even when the area of the elastic members is sufficient as in Comparative Example 2 (positive electrode ratio: 1.2), if the average pressure on the positive electrode surface is low (0.7 MP), the pressure difference can be reduced (0.3 MP) but the pressure applied to the battery element is low and the capacity retention rate declines. When the area of the elastic members is sufficient (positive electrode ratio: 1.2) but the average pressure on the positive electrode surface is too high (3.5 MP) as in Comparative Example 3, the pressure difference on the surface of the positive electrode increases (0.8 MP) and the capacity retention rate declines.

### Industrial Applicability

Because a secondary battery of the present invention has high energy density and excellent cycle characteristics, it has industrial applicability as a power storage device used in various applications.

### Reference Signs List

1: Battery
1: Secondary battery
2: Battery
3: Battery
10: Battery element
10A: Battery element
11: Positive electrode
12: Negative electrode
13: Separator
14: Outer casing
17: Solid electrolyte
20: Elastic member
20A: Elastic member
20B: Elastic member
30: Support
30A: Support
30B: Support
40: Pressure-applying member

## Claims

1. A secondary battery comprising:
a battery element that performs charging and discharging between a positive electrode and a negative electrode that is free of a negative electrode active material;
a pair of elastic members disposed so as to interpose the battery element on both sides;
a pair of supports that are disposed so as to interpose the pair of elastic members on both sides; and
pressure-applying members that apply pressure from both sides of the pair of supports, wherein the surface area of the surface of the elastic members facing the battery element is 1.2 to 2.0 times that of the surface area of the surface of the positive electrode that faces an elastic member, and the average pressure applied to this surface of the positive electrode is 1.0 to 3.0 MPa.

2. The secondary battery according to claim 1, wherein the supports have a flat plate shape, and the pressure-applying members are disposed at each corner of the supports.

3. The secondary battery according to claim 1 or 2, wherein the difference between the maximum pressure and the minimum pressure on the surface of the positive electrode is 0.5 MPa or less.

4. The secondary battery according to any one of claims 1-3, wherein the battery element is configured by sealing the positive electrode, the negative electrode, a separator disposed between the positive electrode and the negative electrode, and an electrolytic solution inside an outer casing.

5. The secondary battery according to any one of claims 1-4, wherein the battery element has a solid electrolyte disposed between the positive electrode and the negative electrode.

6. The secondary battery according to any one of claims 1-5, wherein the battery element performs charging and discharging by depositing lithium metal on the surface of the negative electrode and dissolving the deposited lithium.
